# EUROPEAN PATENT SPECIFICATION

(11) **EP 1 188 118 B1**
(45) Date of publication and mention of the grant of the patent: **11.08.2010**
(21) Application number: 00930011.2
(22) Date of filing: 03.05.2000
(51) Int. Cl.: G06Q 10/00, H04L 12/58

(54) **METHOD FOR DISTRIBUTING MAIL**
VERFAHREN ZUR VERTEILUNG VON POST
PROCEDE DE DISTRIBUTION DE COURRIER

(30) Priority: 06.05.1999 SE 9901644
(43) Date of publication of application: 20.03.2002
(73) Proprietor: Posten AB, 105 00 Stockholm (SE)
(72) Inventor: JOSEFSSON, Annika, S-162 51 Vällingby (SE)
(74) Representative: Örtenblad, Bertil Tore
(86) International application number: PCT/SE2000/000853
(87) International publication number: WO 2000/068801

(56) References cited:
- WO-A1-99/10823
- US-A- 5 699 528
- US-A- 5 862 460

## Description

The present invention relates to a method of sending mail.

It has become more usual to send mail to an addressee electronically. It would be particularly beneficial if bills and other printed matter were to be mailed by electronic mail. In this regard, a sender could deliver information concerning addresses and mail contents on data media to Posten Sverige AB (Swedish Post Office Department), which could then send the mail to respective addressees on the basis of its knowledge of their e-mail addresses.

One problem in this regard is whether or not the e-mail addresses of the addressees are known and whether or not the addressees wish to receive electronic mail.

Another important problem that arises when wishing to send bills or invoices for instance to private individuals via e-mail is that there is no way to check whether the addressee reads his/her e-mail regularly, makes payments by means of his/her personal computer, prints out bills or invoices when necessary, etc., as distinct from a physical letter sent by standard mail. It is assumed that a letter will be delivered to the addressee and that the addressee will open and read his/her mail.

In US 5,966,528 a billing system for electronic billing is described, where a user connects a computer to the Internet.

Also WO 99/10823 describes an electronic billing system.

These problems are solved by means of the present invention, which relates to a method of greatly facilitating the use of e-mail for sending mail of the kind which the addressee can be expected to answer.

The present invention thus relates to a method of sending mail by means of electronic mail, wherein a sender (1) supplies information as to a volume of to be sent, such as addressees (3) and mail contents, on data media to a receiver (2) who shall send said mail to the addressees, which information is arranged to contain the electronic mail addresses of addressees who have expressed a wish to receive electronic mail, and is characterised by feeding contents of said data media into a computer system (4), which computer system has a database (5), causing the computer system (4) to send said mail concerned by electronic mail to addressees that have an electronic mail address; and causing the computer system (4) to sort out mail to remaining addressees to which mail items shall be sent as physical mail (6); and upon expiration of a predetermined time period after which unanswered electronic mail was sent causing the computer system (4) to sort out such addressees (3), who have not yet answered, for the purpose of sending them a mail item by physical mail.

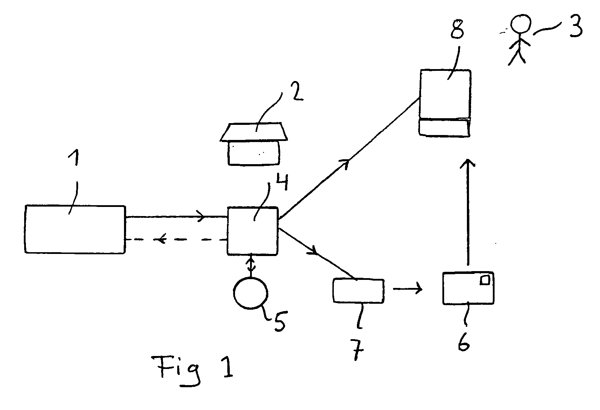

The invention will now be described in more detail partly with reference to an exemplifying embodiment of the invention shown on the accompanying drawing, in which
- Figure 1 is a simple block diagram which is intended to illustrate the invention.

The present invention relates to a method of sending dispatches by electronic mail. By electronic mail is meant so called e-mail that is sent over the Internet or over some corresponding network. Different appropriate authorisation codes may be included.

A sender 1 delivers information concerning the volume of mail to be sent, such as addressees and content, on data media to a receiver 2 that functions to send the mail to the addressees 3.

The sender may be a company who wishes to send bills or invoices to its customers, who then become the addressees. Naturally, the volume of mail may, instead, comprise different tenders, order confirmations, different types of document, such as partially completed declaration forms, etc. However, the invention is primarily useful to companies that wish to send an item of mail to a large number of addressees.

The invention is exemplified below with reference to a gasoline company who wishes to bill companies and private individuals for the purchase of gasoline at filling stations by means of a credit card. It will be understood, however, that the invention is not limited to this area of use.

The gasoline company makes out at regular time intervals a number of bills that are to be sent to credit card owners for payment.

The sender 1, i.e. the gasoline company, sends information concerning the volume of mail, i.e. the bills, to be sent, such as addressees and the contents of respective bills, on data media to the receiver 2 that shall send the mail to the addressees 3. The receiver may suitably be Posten Sverige AB.

According to the invention, the contents of said data media are entered into a computer system 4 belonging to the receiver. The addressees are compared with a register in the database 5 of the computer system that contains information as to whether respective addressees have an e-mail address or not. The database may also include information as to whether or not an addressee wishes to receive certain mail as e-mail and certain other mail as physical mail.

The computer system 4 is then caused to send the mail cocnerned by e-mail to those addressees that have an e-mail address. For instance, the e-mail is sent to the personal computer 8 of the addressee 3 via the Internet. The computer system 4 is also caused to sort out remaining addressees to which the mail shall be sent as physical mail 6, this mail then passing through standard mail routines.

When physical mail is to be sent, the computer system 4 is caused to print out the dispatches by means of a printer 7.

According to the invention, when a predetermined period of time has passed from the time at which unanswered e-mail was first sent, the computer system 4 is caused to sort out such addressees and to send the corresponding e-mail as physical mail 6.

The physical mail is suitably sent as a mail item whose content corresponds to the content of the mail item sent by electronic mail. Instead, a bill or invoice reminder can be sent by physical mail.

By the word answered is meant that the addressee has been in contact with the sender with regard to the mail item concerned. In the case of a bill, this contact will normally mean that payment is made. The sender informs the receiver that contact has been made or has not been made, after said predetermined time period has expired.

This is effected by causing the computer system 4 to receive from the sender information concerning those addressees that have answered their mail.

A large majority of the credit card owners is reached by first sending the mail item by electronic mail. Some of these credit card owners pay their respective bills within the allotted time period, whereas others do not. Those credit card owners who have not said that they are willing to receive electronic mail, are sent their bills or invoices conventionally by physical mail. Some of this latter group will also pay in time, whereas others do not.

The predetermined time period that shall have passed from when unanswered electronic mail was sent may, of course, vary depending on the type of mail concerned. In the case of bills or invoices issued by a gasoline company, an appropriate time may be when the standard payment term expires. In this case, the addressees are sent by physical post a reminder that includes a copy of the bill. Similarly, the same kind of reminder can be sent to those who have already received the first mail item by physical post.

Consequently, many mail items, namely the electronic mail items, are less expensive and simpler to send, and a reminder referring to unanswered or unpaid items will be sent automatically together with reminders to those who have not received electronic mail.

According to one highly preferred embodiment of the invention, the computer system 4 includes a database 5 which includes physical addresses and e-mail addresses of addressees who have expressed a wish to receive electronic post.

Consequently, the anticipated response frequency to electronic mail will be much higher than when electronic mail addresses have been obtained from different sources.

The problems mentioned in the introduction are solved by the present invention.

Although the invention has been described above with reference to exemplifying embodiments thereof, it will be understood that the person skilled in this art will be able to modify the invention to accommodate different types of mail items. For instance, physical post can be sent to an addressee who wishes to receive e-mail, after said addressee has been sent a reminder by e-mail.

The invention is therefore not limited to the aforedescribed embodiments thereof, since variations can be made within the scope of the accompanying Claims.

## Claims

1. A method of sending mail by means of electronic mail, wherein a sender (1) supplies information as to a volume of mail to be sent, such as addressees (3) and mail contents, on data media to a receiver (2) who shall send said mail to the addressees, which information is arranged to contain the electronic mail addresses of addressees who have expressed a wish to receive electronic mail, **characterised by** feeding contents of said data media into a computer system (4), which computer system has a database (5), causing the computer system (4) to send said mail concerned by electronic mail to addressees that have an electronic mail address; and causing the computer system (4) to sort out mail to remaining addressees to which mail items shall be sent as physical mail (6); and upon expiration of a predetermined time period after which unanswered electronic mail was sent causing the computer system (4) to sort out such addressees, who have not yet answered, (3) for the purpose of sending them a mail item by physical mail.

2. A method according to Claim 1, **characterised in that** the database (5) is caused to contain physical addresses of the addressees.

3. A method according to Claim 1 or 2, **characterised by** causing the computer system (4) to receive from the sender information relating to those addressees who have answered their mail.

## Patentansprüche

1. Ein Verfahren zum Versenden von Post mittels elektronischer Post, bei dem ein Absender (1) Information bezüglich eines Volumens an zu versendender Post, wie etwa Adressaten (3) und Postinhalte, einem Empfänger (2) auf Datenmedien liefert, der die Post an die Adressaten senden soll, wobei die Information so gestaltet ist, dass sie die elektronischen Postadressen von Adressaten beinhaltet, die einen Wunsch ausgedrückt haben, elektronische Post zu empfangen, **gekennzeichnet durch** das Eingeben von Inhalten der Datenmedien in ein Computersystem (4), welches Computersystem eine Datenbank (5) aufweist, Veranlassen des Computersystems (4), betroffene Post per elektronischer Post an Adressaten zu versenden, die eine elektronische Postadresse haben; und Veranlassen des Computersystems (4), Post an verbleibende Adressaten auszusortieren, an die Poststücke als physische Post (6) versendet werden soll; und, nach Ablauf einer vorbestimmten Frist, nach der unbeantwortete elektronische Post versendet wurde, Veranlassen des Computersystems (4), diejenigen Adressaten (3) auszusortieren, die bisher nicht geantwortet haben, um ihnen ein Poststück per physischer Post zuzusenden.

2. Ein Verfahren nach Anspruch 1, **dadurch gekennzeichnet, dass** die Datenbank (5) veranlasst wird, physische Adressen der Adressaten zu beinhalten.

3. Ein Verfahren nach Anspruch 1 oder 2, **dadurch gekennzeichnet, dass** das Computersystem (4) veranlasst wird, vom Absender Information in Bezug auf diejenigen Adressaten zu empfangen, die ihre Post beantwortet haben.

## Revendications

1. Procédé d'envoi de courrier à un système de courrier électronique selon lequel,
un émetteur (1) fournit l'information concernant un volume de courriers à envoyer tel que les adresses (3) et le contenu des courriers sur support de données vers un récepteur (2) qui doit envoyer les courriers aux adresses, l'information étant prévue pour contenir les adresses des courriers électroniques des destinataires ayant souhaité recevoir le courrier électronique,
**caractérisé en ce qu'**
- on introduit le contenu des supports de données dans un système d'ordinateur (4),
- le système d'ordinateur a une base de données (5),
- on commande le système d'ordinateur (4) pour envoyer les courriers concernés, sous forme de courrier électronique aux destinataires ayant une adresse de courrier électronique, et
- on demande au système d'ordinateur (4) de sélectionner les courriers pour les destinataires restants qui recevront les courriers par un envoi de courrier physique (6) et à la fin d'une période de temps prédéterminée après laquelle le courrier électronique sans réponse a été envoyé, le système d'ordinateur (4) sélectionne les adresses qui n'ont pas répondu (3) pour leur envoyer un courrier sous forme de courrier physique.

2. Procédé selon la revendication 1,
**caractérisé en ce que**
la base de données (5) contient des adresses physiques des destinataires.

3. Procédé selon la revendication 1 ou 2,
**caractérisé en ce que**
le système d'ordinateur (4) reçoit de l'émetteur les informations concernant les destinataires qui ont répondu à leur courrier.
